# EUROPEAN PATENT APPLICATION

(11) **EP 4 620 302 A1**
(43) Date of publication of application: **24.09.2025**
(21) Application number: 25155981.1
(22) Date of filing: 05.02.2025
(51) Int. Cl.: A01M 31/00, A01M 29/10, A01M 29/16

(54) **SYSTEM, CONTROL DEVICE, AND PROGRAM**

(30) Priority: 12.03.2024 JP 2024038305
(71) Applicant: Kabushiki Kaisha Toshiba, Tokyo 105-0023 (JP)
(72) Inventor: Sakamoto, Takafumi, Minato-ku, Tokyo (JP); Shijo, Tetsu, Minato-ku, Tokyo (JP)
(74) Representative: Hoffmann Eitle

(57) **Abstract**

According to one arrangement, a system includes an output device (12), a sensor (11), and a control device (13). The output device (12) outputs a medium (6-1) or a substance (6-2). The sensor (11) generates sensor information by sensing a surrounding environment (2) of a location where the output device (12) is installed. The control device (13) controls the output device (12) and the sensor (11). The control device (13) includes a processing module (101, 102) and a control module (103). The processing module (101, 102) acquires environmental information on the surrounding environment (2) changed in response to the output medium (6-1) or substance (6-2) by using the sensor information. The control module (103) changes, based on the environmental information, at least one of (A) whether or not the output device (12) outputs the medium (6-1) or the substance (6-2) and (B) an output content of the medium (6-1) or substance (6-2) to be output.

## Description

### FIELD

The present disclosure relates to a system, a control device, and a program.

### BACKGROUND

A wild bird or a wild animal sometimes intrudes into areas such as solar power plants, wind power plants, railway facilities, airports, and farmland. The intruding bird or animal may cause a trouble (damage) such as breaking of equipment.

For example, since in urban areas, areas of lands suitable for installation of solar farms are decreasing, the number of solar farms installed in mountainous areas is increasing. Compared to the urban areas, there are more birds and animals living in the mountainous areas. Accordingly, the frequency of damage to power generation equipment from birds and animals that have intruded into the solar farms is increasing. Further, the damage to the power generation equipment causes a decrease in the generated amount of power or even a failure of power generation.

When a trouble has occurred in the equipment, it is necessary for workers to go to the site. However, for example, access to the site such as mountainous areas is difficult in many cases and the time and cost required for the workers to travel to the site is large. Further, due to a shortage of workers, it is becoming increasingly difficult to secure workers for operation and maintenance (O&M). Therefore, personnel saving and labor saving in O&M are required.

By contrast, in some areas, the number of birds and animals such as deer, boars, and bears are increasing. Therefore, it is predicted that damage to the equipment from the intruding birds and animals will continue at a high level. Under these circumstances, it is necessary to achieve a new function that can reduce the damage from the intruding birds and animals.

### BRIEF DESCRIPTION OF THE DRAWINGS

FIG. 1 is a block diagram schematically illustrating a system according to an arrangement.
FIG. 2 is a block diagram illustrating an example of a hardware configuration of a control device included in the system according to the arrangement.
FIG. 3 is a diagram illustrating a configuration example of a medium management table used in the system according to the arrangement.
FIG. 4 is a diagram illustrating a configuration example of a bird/animal - medium management table used in the system according to the arrangement.
FIG. 5 is a block diagram illustrating an example of a functional configuration of the system according to the arrangement.
FIG. 6 is a flowchart showing an example of the procedure of a medium control process executed in the system according to the arrangement.
FIG. 7 is a diagram showing a first measurement example of a repellent effect in the system according to the arrangement.
FIG. 8 is a diagram showing a second measurement example of the repellent effect in the system according to the arrangement.
FIG. 9 is a diagram showing a third measurement example of the repellent effect in the system according to the arrangement.
FIG. 10 is a diagram showing a fourth measurement example of the repellent effect in the system according to the arrangement.

### DETAILED DESCRIPTION

According to one arrangement, a system includes an output device, a sensor, and a control device. The output device outputs a medium or a substance. The sensor generates sensor information by sensing a surrounding environment of a location where the output device is installed. The control device controls the output device and the sensor. The control device includes a processing module and a control module. The processing module acquires environmental information on the surrounding environment changed in response to the output medium or substance by using the sensor information. The control module changes, based on the environmental information, at least one of (A) whether or not the output device outputs the medium or the substance and (B) an output content of the medium or substance to be output.

Various arrangements will be described hereinafter with reference to the accompanying drawings.

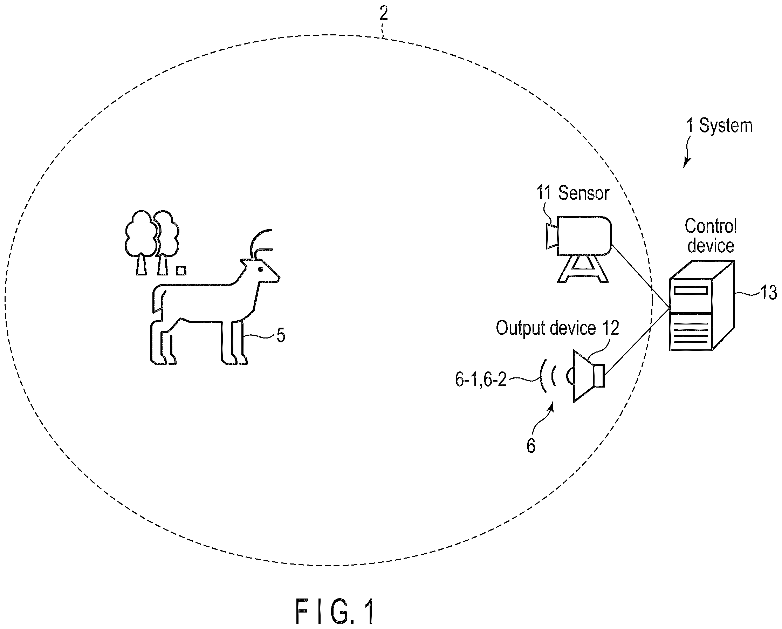

FIG. 1 is a block diagram schematically illustrating a system 1 according to an arrangement. The system 1 is a system for deterring one or more birds and/or animals 5 from intruding into a specific area.

The specific area is an area where equipment that may be damaged (trouble) by an intrusion of the birds and/or animals 5 is installed. Specifically, the specific area is an area that includes, for example, a solar power plant, a wind power plant, a railway facility, or an airport. The specific area may be a farmland where a crop that is damaged from the intrusion of the birds and/or animals 5 is grown. Alternatively, the specific area may be an area where equipment that may threaten the birds and/or animals 5 is installed. Such an area is, for example, an area where wind power generation equipment is installed, or the roadway.

The birds and/or animals 5 are at least one of one or more birds to be repelled and one or more animals to be repelled (i.e., one or more pests or vermin). In other words, the birds and/or animals 5 is a specific species of bird or animal that may cause damage when intruding into the specific area. Specifically, the birds and/or animals 5 are, for example, Asiatic black bears, Japanese sika deer, wild boars, crows, or the like. In addition, the bird and/or animals 5 may be a specific species of bird or animal that may be threatened by the equipment. Specifically, the birds and/or animals 5 threatened by the equipment are, for example, white-tailed sea eagles, Steller's sea eagles, or the like. Hereinafter, to simplify the explanation, the birds and/or animals 5 may be simply referred to as animals 5. The animals 5 (or an animal 5) described below may be replaced with birds 5 (or a bird 5).

The system 1 is configured to deter one or more animals 5 from intruding by using a medium 6-1 or a substance 6-2 that repels the animals 5. For example, the system 1 outputs the medium 6-1 or the substance 6-2 when the animals 5 have intruded into a specific area, and thus repels the animals 5 from the specific area and causes the animals 5 to avoid the intrusion into the specific area.

The system 1 includes, for example, a sensor 11, an output device 12, and a control device 13. The sensor 11 and the control device 13 are connected by a wired or wireless connection, and are capable of communicating with each other (that is, transmitting and receiving information). The output device 12 and the control device 13 are connected by a wired or wireless connection, and are capable of communicating with each other. They may be connected via a communication network and be capable of communicating with each other, and the control device 13 may be installed in a remote location.

The sensor 11 is a device that generates information (data) by sensing a surrounding environment 2 of a location where the output device 12 is installed. Specifically, the sensor 11 senses physical or chemical information in the surrounding environment 2 and generates information based on the sensed physical or chemical quantity. The information generated by the sensor 11 may be also referred to as sensor information. The sensor 11 operates, for example, continuously. Alternatively, the sensor 11 may operate intermittently in order to reduce power consumption. Note that the surrounding environment 2 illustrated in FIG. 1 is an example, and a range corresponding to the surrounding environment 2 (that is, a range that can be sensed by the sensor 11) is set freely depending on the specific area and the sensor 11 that is used.

The sensor 11 includes, for example, at least one of a camera (imaging device), a microphone, an infrared sensor, an ultrasonic sensor, and a radio device with an antenna connected thereto for transmitting and receiving electromagnetic waves. Alternatively, the sensor 11 may include any combination of two or more of the camera, microphone, infrared sensor, ultrasonic sensor, and radio device. Further, the sensor 11 includes a communication device for communicating with the outside (for example, the control device 13). The sensor 11 transmits the sensor information to the control device 13 via the communication device, for example, in real time or at regular intervals.

The sensor information is, for example, time series information. The sensor information is used to acquire information on the surrounding environment 2 changed in response to the medium 6-1 or substance 6-2 output by the output device 12 (hereinafter referred to as environmental information). The changed surrounding environment 2 includes, for example, an intrusion of an animal 5 and a behavior (reaction) of an animal 5 in response to the output medium 6-1 or substance 6-2. The effect of the output medium 6-1 or substance 6-2 on the animal 5 may be referred to as a repellent effect. The repellent effect of a certain medium 6-1 or substance 6-2 may decrease, for example, when the animal 5 ends up becoming accustomed to the output of the medium 6-1 or substance 6-2 (for example, when the animal 5 has experienced the output multiple times).

The output device 12 is a device that outputs a medium 6-1 or a substance 6-2. The output device 12 outputs the medium 6-1 or the substance 6-2, for example, to an animal 5 that has intruded into a specific area (for example, the surrounding environment 2) .

The medium 6-1 is a medium that is expected to have a repellent effect on an animal 5 (or animals 5). The medium 6-1 includes, for example, an acoustic wave, an odor (gas), light, an image (video), and an electromagnetic wave. The medium 6-1 may be any combination of two or more of the acoustic wave, odor, light, image, and electromagnetic wave.

The substance 6-2 is a substance (material) that is expected to have a repellent effect on an animal 5 (or animals 5). The substance 6-2 includes, for example, water (liquid) and a ball (solid material). The substance 6-2 may be a combination of the water and ball.

Further, the output device 12 may output any combination of the medium 6-1 and the substance 6-2. Hereinafter, to make the explanation clear, the medium 6-1 and the substance 6-2 may be simply referred to as the medium 6 to mean at least one of them.

The output device 12 includes a component that outputs the medium 6. For example, when outputting an acoustic wave (or acoustic waves), the output device 12 includes a speaker. When outputting light, the output device 12 includes a lighting (light source) unit. When outputting an odor, the output device 12 includes a spraying unit. When outputting water, the output device 12 includes a water-spraying unit. Similarly, for another type of medium 6, the output device 12 includes an output mechanism for outputting the medium 6. The output device 12 may include a plurality of output mechanisms for outputting a plurality of types of media 6, respectively.

Further, the output device 12 includes a communication device for communicating with the outside (for example, the control device 13). The output device 12 receives information indicative of at least one of whether or not to output the medium 6 and the content of the medium 6 to be output (output content), from the control device 13 via the communication device. The output device 12 outputs the medium 6 based on the received information.

The control device 13 is a device that controls the operation of the sensor 11 and the operation of the output device 12. The control device 13 is realized as a computer, for example. The control device 13 controls, for example, the output of the medium 6 by the output device 12 by using the sensor information received from the sensor 11.

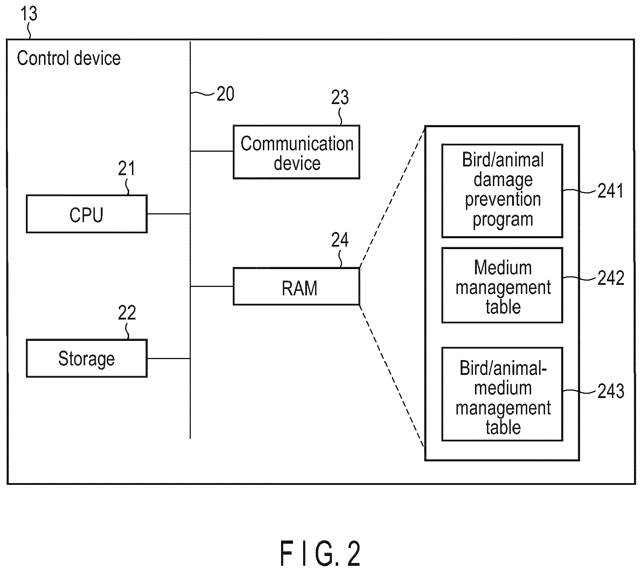

FIG. 2 is a block diagram illustrating an example of a hardware configuration of the control device 13.

The control device 13 includes, for example, a central processing unit (CPU) 21, a storage 22, a communication device 23, and a random access memory (RAM) 24. The CPU 21, the storage 22, the communication device 23, and the RAM 24 may be connected to each other via a bus 20, for example.

The CPU 21 is, for example, at least one processor. The CPU 21 controls the operation of various components of the control device 13.

The storage 22 is a storage device including a nonvolatile memory. The storage 22 is realized as a solid-state drive (SSD) or a hard disk drive (HDD), for example.

The communication device 23 is a device configured to perform wired or wireless communication. The communication device 23 includes a transmitter that transmits a signal (that is, data and information) and a receiver that receives a signal. The communication device is configured to communicate with each of the sensor 11 and the output device 12 by conforming to any communication standard such as a wired local area network (LAN), a wireless LAN, mobile communications, or Bluetooth (registered trademark).

The RAM 24 is a volatile memory. The RAM 24 is realized as, for example, a dynamic random access memory (DRAM) or a static random access memory (SRAM). A memory area of the RAM 24 is allocated, for example, as storage areas of an operating system (OS), drivers, and various application programs. The application programs include, for example, a bird/animal damage prevention program 241.

The bird/animal damage prevention program 241 is a program that controls the output of the medium 6 by the output device 12 by using the sensor information received from the sensor 11. The bird/animal damage prevention program 241 is loaded from the storage 22 to the RAM 24, for example, when being executed.

Further, the memory area of the RAM 24 may be allocated as a storage area of the medium management table 242 and a bird/animal - medium management table 243. The medium management table 242 is data for managing an output content of a medium 6 output from the output device 12. The bird/animal - medium management table 243 is data for managing a relationship between an animal 5 and an output content of a medium 6 that is used for the animal 5. The medium management table 242 and the bird/animal - medium management table 243 are loaded from the storage 22 to the RAM 24 when, for example, the bird/animal damage prevention program 241 is executed.

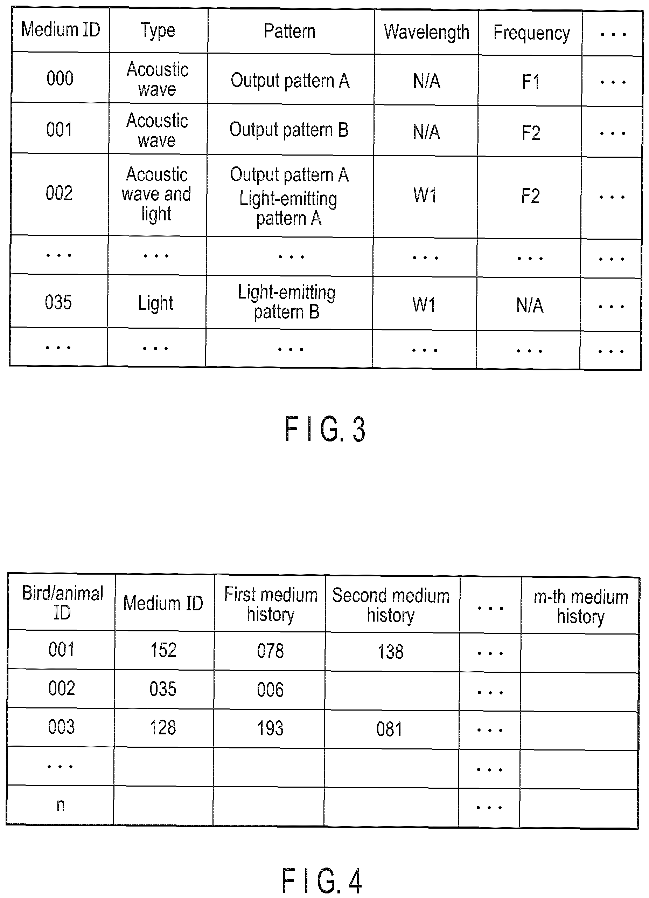

With reference to FIGS. 3 and 4, a configuration of each of the medium management table 242 and the bird/animal - medium management table 243 will be explained.

FIG. 3 illustrates an example of the configuration of the medium management table 242. The medium management table 242 includes a plurality of entries that respectively correspond to a plurality of output contents related to media 6. Each of the plurality of entries includes, for example, a medium ID field, a type field, a pattern field, a wavelength field, and a frequency field.

In an entry corresponding to an output content, the medium ID field indicates identification information by which the output content is uniquely identifiable (i.e., medium ID). That is, in the medium ID field, a medium ID assigned to the corresponding output content is set.

The type field indicates the type of the medium 6 (that is, the medium 6-1 or substance 6-2) used in the corresponding output content. In the type field, for example, one medium 6, such as "acoustic wave" or "light" is set. Alternatively, in the type field, a combination of two or more media 6, such as "acoustic wave and light" may be set.

The pattern field indicates a pattern used in the corresponding output content. For example, in a case where an acoustic wave is used as the medium 6, a time-series output pattern of the acoustic wave (time waveform data) is set in the pattern field. Further, for example, in a case where light is used as the medium 6, a time-series output pattern of the light (light-emitting pattern) is set in the pattern field.

The wavelength field indicates a wavelength of light used in the corresponding output content. Specifically, in a case where light is used as the medium 6, the wavelength of the light is set in the wavelength field. Note that in a case where light is not used as the medium 6, no value is set in the wavelength field.

The frequency field indicates a frequency of an acoustic wave used in the corresponding output content. Specifically, in a case where an acoustic wave is used as the medium 6, the frequency of the acoustic wave is set in the acoustic wave field. In a case where an acoustic wave is not used as the medium 6, no value is set in the wavelength field. Note that a pattern of frequencies used in the corresponding output content may be set in the pattern field.

In the example illustrated in FIG. 3, as an output content corresponding to medium ID "000", outputting an acoustic wave of a frequency F1 with an output pattern A is specified. As an output content corresponding to medium ID "001", outputting an acoustic wave of a frequency F2 with an output pattern B is specified. As an output content corresponding to medium ID "002", outputting an acoustic wave of a frequency F2 with an output pattern and outputting light of a wavelength W1 with a light-emitting pattern A are specified. Further, as an output content corresponding to medium ID "035", outputting light of a wavelength W1 with a light-emitting pattern B is specified.

With the configuration of the medium management table 242 described above, the system 1 (more specifically, the control device 13) can manage the output contents of various media 6. Note that the configuration of the medium management table 242 shown in FIG. 3 and the output contents of the media 6 managed with the medium management table 242 are an example. The medium management table 242 may be information in any format by which output contents of various media 6 that are expected to have respective repellent effects on one or more animals 5.

For example, each of the plurality of entries in the medium management table 242 may include an output device ID field. The output device ID field indicates, among a plurality of output devices 12 that are installed at different locations respectively, identification information (output device IDs) by which one or more output devices 12 that output a medium 6 (or media 6) are uniquely identifiable. In this manner, the output devices 12 that output the medium 6 may be specified as an output content of the medium 6.

FIG. 4 illustrates an example of the configuration of the bird/animal - medium management table 243. The bird/animal - medium management table 243 includes n entries that correspond to n animals 5 (or n birds, or n birds and/or animals). The n animals 5 may be n species of animals or may be n individuals. Each of the n entries includes a bird/animal ID field, a medium ID field, and m medium history fields. For example, n is any integer greater than or equal to one. For example, m is any integer greater than or equal to one.

In an entry corresponding to an animal 5, the bird/animal ID field indicates identification information by which the animal 5 is uniquely identifiable (bird/animal ID). Specifically, in the bird/animal ID field, a bird/animal ID assigned to the species of the corresponding animal 5 (for example, deer) is set. Alternatively, in the bird/animal ID field, a bird/animal ID assigned to an individual of the corresponding animal 5 (for example, a certain individual of deer) may be set.

The medium ID field indicates identification information by which an output content of a medium 6 used for the corresponding animal 5 is uniquely identifiable (medium ID). As described above with reference to the medium management table 242 shown in FIG. 3, a medium ID is associated with information that indicates a specific output content of a medium 6, for example.

Each of the m medium history fields indicates a medium ID that indicates an output content of a medium 6 that was used in the past for the corresponding animal 5 (that is, a medium ID that was set in the medium ID field in the past). The m medium history fields include, for example, a first medium history field, a second medium history field, ... , and a m-th medium history field. In the first medium history field, the second medium history field, ... , and the m-th medium history field, medium IDs may be set sequentially in order from the most recently set in the medium ID field. It is assumed that the output content of the medium 6 corresponding to the medium ID set in each of the medium history fields was already used for the corresponding animal 5 and thus the repellent effect on the animal 5 is low. Therefore, for example, the medium IDs set in each of the medium history fields is not set in the medium ID field corresponding to the animal 5.

In the example shown in FIG. 4, it is specified for an animal 5 whose bird/animal ID is "001" that an output content of a medium 6 having a medium ID "152" is used. Further, it is indicated for the animal 5 whose bird/animal ID is "001" that an output content of a medium 6 having a medium ID "078" and an output content of a medium 6 having a medium ID "138" were used in the past.

For example, it is specified for an animal 5 whose bird/animal ID is "002" that the output content of the medium 6 having the medium ID "035" is used. As specified in the medium management table 222 shown in FIG. 3, the output content of the medium 6 having the medium ID "035" is to emit light of the wavelength W1 with the light-emitting pattern B.

With the above-described configuration of the bird/animal - medium management table 243, the system 1 can manage the output content of the medium 6 used for each animal 5. Specifically, the system 1 can manage, for each animal 5, the output content of the medium 6 to be used at present and the output contents of the media 6 that were already used in the past and whose repellent effects decreased.

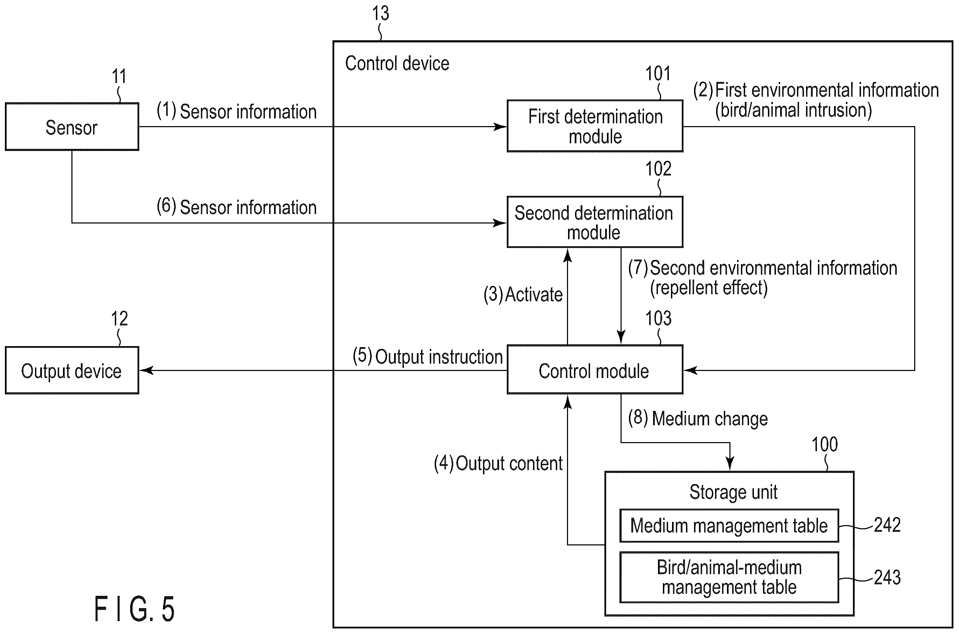

Next, FIG. 5 is a block diagram showing an example of a functional configuration of the control device 13. The control device 13 includes, for example, a storage unit 100, a first determination module 101, a second determination module 102, and a control module 103.

The storage unit 100 is, for example, a storage area that is implemented as the RAM 24 (or the storage 22). The storage unit 100 stores, for example, the medium management table 242 and the bird/animal - medium management table 243.

The first determination module 101, the second determination module 102, and the control module 103 are functions that are realized, for example, by the CPU 21 executing the bird/animal damage prevention program 241.

The first determination module 101 and the second determination module 102 are processing modules that acquire environmental information on the surrounding environment 2 changed in response to the medium 6-1 or substance 6-2 output by the output device 12 by using the sensor information received from the sensor 11.

The control module 103 controls the operation of the sensor 11, the output device 12, and various components of the control device 13. The control module 103 changes (determines), for example, at least one of (A) whether or not the output device 12 outputs the medium 6-1 or the substance 6-2 and (B) a content of the medium 6-1 or the substance 6-2 to be output on the basis of the environmental information received from the first determination module 101 or the second determination module 102.

Specifically, the first determination module 101 generates the environmental information that indicates whether or not any animal 5 has intruded (hereinafter, also referred to as first environmental information) by using the sensor information for a first period ((1) in FIG. 5). The first environmental information is, for example, information on an animal 5 that has intruded into the surrounding environment 2. The first determination module 101 operates continuously, for example. Alternatively, the first determination module 101 may operate intermittently in order to reduce power consumption.

For example, in a case where the sensor 11 is a camera, the sensor information is video data that includes multiple images in time series. In this case, the first determination module 101 performs a detection process to detect an animal 5 that has intruded into the surrounding environment 2 from the images. For the detection process, for example, pattern matching using physical features corresponding to an animal 5 to be detected, or a learned model that detects the animal 5 from the input images. The learned model is, for example, a mathematical model or a physical model. The learned model is generated by machine learning using a large amount of image data of the animal 5 to be detected.

Note that the first determination module 101 may further perform, in the detection process using the sensor information, at least one of detection of the species of the animal 5, detection of the number of animals 5 (or the number of animals 5 for each species), and identification of an individual of each of the animals 5. For example, an individual of deer is identifiable with high accuracy based on the way its fur grows. Further, for example, an individual of horses is identifiable by using the features of its eyes.

After the detection of various animals 5 by using the sensor information, the first determination module 101 may determine whether or not each of the detected animals 5 is an animal 5 to be repelled. For example, after detecting an animal 5 such as a black bear, Japanese deer, a wild boar, a Japanese macaque, a cat, a crow, a pigeon, or the like, the first determination module 101 may determine whether or not the detected animal 5 is any of the black bear, Japanese deer, and wild boar that are targets to be repelled.

The first determination module 101 performs the detection process using the sensor information and then sends the first environmental information indicating whether or not one or more animals 5 (that is, animals 5 to be repelled) have been detected to the control module 103 ((2) in FIG. 5). The first determination module 101 may send, to the control module 103, the first environmental information that further includes at least one of the species of the detected animals 5, the number of the detected animals 5 (or the number of animals 5 for each species), and the identified individuals of the animals 5.

The control module 103 changes (determines) whether or not the output device 12 outputs the medium 6 on the basis of the first environmental information received from the first determination module 101.

For example, when the control module 103 has received, from the first determination module 101, the first environmental information indicating that at least one animal 5 has been detected, the control module 103 activates the second determination module 102 ((3) in FIG. 5). Then, the control module 103 acquires the output content of the medium 6 corresponding to the detected animal 5 from the storage unit 100 ((4) in FIG. 5). Specifically, the first determination module 101 acquires, for example, the medium ID associated with the bird/animal ID of the detected animal 5 from the bird/animal - medium management table 243. The bird/animal ID of the detected animal 5 may be a bird/animal ID indicative of the species of the detected animal 5, or may be a bird/animal ID indicative of an individual of the detected animal 5. The first determination module 101 acquires the output content of the medium 6 associated with the acquired medium ID from the medium management table 242. Then, the first determination module 101 instructs the output device 12 to output the medium 6 based on the acquired output content ((5) in FIG. 5). Thus, the output device 12 outputs the medium 6 based on the output content in accordance with the instruction.

In response to the activation by the control module 103, the second determination module 102 generates environmental information indicating whether the repellent effect of the medium 6, which has been output from the output device 12, on the intruding animal 5 is decreasing or not (hereinafter, also referred to as second environmental information) by using the sensor information for a second period ((6) in FIG. 5). The second environmental information is information regarding a change in the animal 5 in response to the output medium 6. The second period is, for example, a period after the first period. More specifically, the second period is, for example, a period after the time when the output device 12 starts outputting the medium 6 after the first period.

The second determination module 102 performs a measurement process to measure, from images, the repellent effect of the medium 6 output by the output device 12 on the intruding animal 5. In the measurement process, for example, the repellent effect is measured based on at least one of a pause time of the animal 5 in response to the output medium 6, the distance between the animal 5 and the output device 12, the number of animals 5 in the surrounding environment 2, the frequency of intrusion of the animal 5 into the surrounding environment 2, and the heart rate of the animal 5 in response to the output medium 6. For example, when the measured repellent effect is lower than a specific level, the second determination module 102 generates the second environmental information indicating that the repellent effect is lower than the specific level (that is, the repellent effect is insufficient).

Specifically, the second determination module 102 measures a pause time of the animal 5 in response to the output medium 6 (first pause time). In this case, the sensor 11 is, for example, a camera. Then, when the first pause time is shorter than a first threshold value, the second determination module 102 generates the second environmental information indicating that the first pause time is shorter than the first threshold value. Alternatively, when the first pause time is shorter than a pause time of the animal 5 in response to the medium 6 outputted at the time when the animal 5 last intruded into the surrounding environment 2 (second pause time), the second determination module 102 generates the second environmental information indicating that the first pause time is shorter than the second pause time.

For example, the repellent reaction of deer when an acoustic wave is used as a medium 6 is known. Specifically, when deer first hear an acoustic wave that has not been experienced before, they pause for a long period, but the pause time gradually becomes shorter as they become accustomed to the acoustic wave.

Therefore, the second determination module 102 may set a threshold value by performing an experiment on an animal 5 to be repelled in advance to measure the distribution of the pause time. Specifically, the second determination module 102 sets, as the first threshold value, for example, a time obtained by reducing, by a specific ratio, a pause time when the animal 5 first experiences an output of a certain medium 6 (for example, a pause time when the animal 5 first hears a specific acoustic wave). The specific ratio is, for example, 50%.

Note that the second determination module 102 may measure a distance between the animal 5 and the output device 12 (first distance) by using the sensor information. In this case, the sensor 11 is, for example, a camera, an infrared sensor, an ultrasonic sensor, or a radio device. When the first distance is shorter than a second threshold value, the second determination module 102 generates the second environmental information indicating that the first distance is shorter than the second threshold value. Alternatively, when the first distance is shorter than a distance between the animal 5 and the output device 12 when the animal 5 last intruded into the surrounding environment 2 (second distance), the second determination module 102 generates the second environmental information indicating that the first distance is shorter than the second distance.

The second determination module 102 may measure the number (first number) of animals 5 (individuals) by using sensor information. In this case, the sensor 11 is, for example, a camera. When the first number is greater than a third threshold value, the second determination module 102 generates the second environmental information indicating that the first number is greater than the third threshold value. Alternatively, when the first number is greater than the number (second number) of animals 5 last intruded into the surrounding environment 2, the second determination module 102 generates the second environmental information indicating that the first number is greater than the second number.

The second determination module 102 may measure a frequency (first frequency) at which animals 5 intruded into the surrounding environment 2 during the second period by using sensor information. In this case, the sensor 11 is, for example, a camera. When the first frequency is higher than a fourth threshold value, the second determination module 102 generates the second environmental information indicating that the first frequency is higher than the fourth threshold value. Alternatively, when the first frequency is higher than a frequency (second frequency) at which animals 5 intruded into the surrounding environment 2 during a third period before the second period, the second determination module 102 generates the second environmental information indicating that the first frequency is higher than the second frequency. The second period and the third period are, for example, periods of the same length.

Further, the second determination module 102 may measure the heart rate of an animal 5 (first heart rate) by using the sensor information. In this case, the sensor 11 is, for example, a radio device with an antenna. The radio device receives, via the antenna, a reflected wave of an electromagnetic wave output by the output device 12. The reflected wave is an electromagnetic wave occurred by reflection of the electromagnetic wave incident on the animal 5. The second determination module 102 measures, for example, the heart rate of the animal 5 on the basis of the reflected wave. When the first heart rate is lower than a fifth threshold value, the second determination module 102 generates the second environmental information indicating that the first heart rate is lower than the fifth threshold value. Alternatively, when the first heart rate has not increased by a sixth threshold value or more compared to the heart rate of the animal 5 before the medium 6 is output by the output device 12 (second heart rate), the second determination module 102 generates the second environmental information indicating that the first heart rate has not increased by the sixth threshold value or more. The second heart rate is, for example, the heart rate of the animal 5 during the first period. Note that in a case where the heart rate before the medium 6 is output (the second heart rate) and the heart rate after the medium 6 is output (the first heart rate) are measured, the control module 103 activates the second determination module 102 before making the output device 12 to output the medium 6.

Further, the second determination module 102 may generate the second environmental information based on any combination of two or more of the following: the pause time of the animal 5 in response to the output medium 6, the distance between the animal 5 and the output device 12, the number of animals 5 in the surrounding environment 2, the frequency at which the animal 5 has intruded into the surrounding environment 2, and the heart rate of the animal 5 in response to the output medium 6. In addition, the second determination module 102 is capable of measuring various indicators related to the repellent effect of the medium 6 on the animal 5, which are not limited to the above-described examples. The second determination module 102 may generate the second environmental information indicating that the repellent effect has decreased on the basis of the measured indicator (or indicators).

The second determination module 102 sends the generated second environmental information to the control module 103 ((7) in FIG. 5).

The control module 103 may change the output content of the medium 6 output from the output device 12 to the intruding animal 5 on the basis of the first environmental information received from the first determination module 101 and the second environmental information received from the second determination module 102 ((8) in FIG. 5). For example, when the control module 103 receives, from the first determination module 101, the first environmental information indicating that an animal 5 has been detected, and then receives the second environmental information indicating that the repellent effect by the current output content of the medium 6 has decreased, the control module 103 changes, in the bird/animal - medium management table 243, the medium ID (first medium ID) that is currently associated with the bird/animal ID of the detected animal 5, to another medium ID. Specifically, the control module 103 identifies an entry in the bird/animal - medium management table 243 that includes the bird/animal ID of the detected animal 5 (hereinafter, also referred to as the target entry). The control module 103 selects a new medium ID (second medium ID) from the medium management table 242 from which the medium ID currently set in the medium ID field (that is, the first medium ID) of the target entry and a medium ID set in each medium history field of the target entry are excluded. Then, the control module 103 newly sets the second medium ID in the medium ID field of the target entry. Further, the control module 103 sets the first medium ID, which was set in the medium ID field, in a medium history field of the target entry.

Thus, for example, when the first determination module 101 has generated environmental information on an animal 5 that has intruded into the surrounding environment 2 by using the sensor information for a third period after the second period (hereinafter, also referred to as third environmental information), the control module 103 may instruct the output device 12 to output the medium 6 with the changed output content, based on the third environmental information. In response to the instruction, the output device 12 outputs the medium 6 with the changed output content. Note that the bird/animal ID of the animal 5 indicated by the third environmental information is the same as the bird/animal ID of the animal 5 indicated by the first environmental information, for example.

With the above-described configuration, the system 1 can output the medium 6 that has a high repellent effect on the intruding animal 5. When the repellent effect of the medium 6 on the animal 5 has decreased, the system 1 changes the output content of the medium 6. With this configuration, the system 1 can maintain the output of the medium 6 that has a high repellent effect on the animal 5. In other words, the repellent effect of the output by the output device 12 on the animal 5 can be maintained over a long period of time. Thus, the system 1 can reduce the damage caused by the intrusion of the animal 5 and reduce the impact on the animal 5 itself.

In contrast, for example, a system according to a comparative example may simply determine, when an animal stays (for example, pauses for a long time) after an acoustic wave or light is output, that the animal becomes accustomed to the acoustic wave or light. Based on the determination, the system of the comparative example changes the acoustic wave or light output to the animal.

However, as described above in this arrangement, an animal 5 may pause in response to an output medium 6 (for example, the animal 5 may be wary of the output medium 6). Since the system of the comparative example simply determines that the animal becomes accustomed to the acoustic wave or light when it pauses, and therefore it can be said that the reaction and behavior of the animal in response to the output medium is not sufficiently taken into consideration. As a result, in the system of the comparative example, there is a possibility that the repellent effect of the medium to the animal (for example, whether the animal becomes accustomed to the medium or not) is erroneously determined. Further, in the system of the comparative example, there is no consideration given to controlling the output content of the medium for each individual animal, or controlling the output content of the medium when a large number of animals intrude, or the like. As described above, in the system of the comparative example, there is a possibility that the repellent effect of the output on the animal cannot be sustained over a long period of time.

In the system 1 of the arrangement, the first determination module 101 and the second determination module 102 acquire the environmental information regarding a change in the surrounding environment 2 (for example, intrusion of an animal 5 or a behavior of an intruding animal 5) in response to an output medium 6 by using the sensor information. Then, the control module 103 changes at least one of whether or not the output device 12 outputs the medium 6 and the output content of the medium 6, based on the environmental information. Thus, the system 1 can sustain the repellent effect of the output on the animal 5 for a long period of time, and reduce the damage caused by the animal 5 intruding into the specific area and the impact on the animal 5 itself. For example, the system 1 can prevent the facility of an institution from being destroyed by the animal 5 and reduce economic losses.

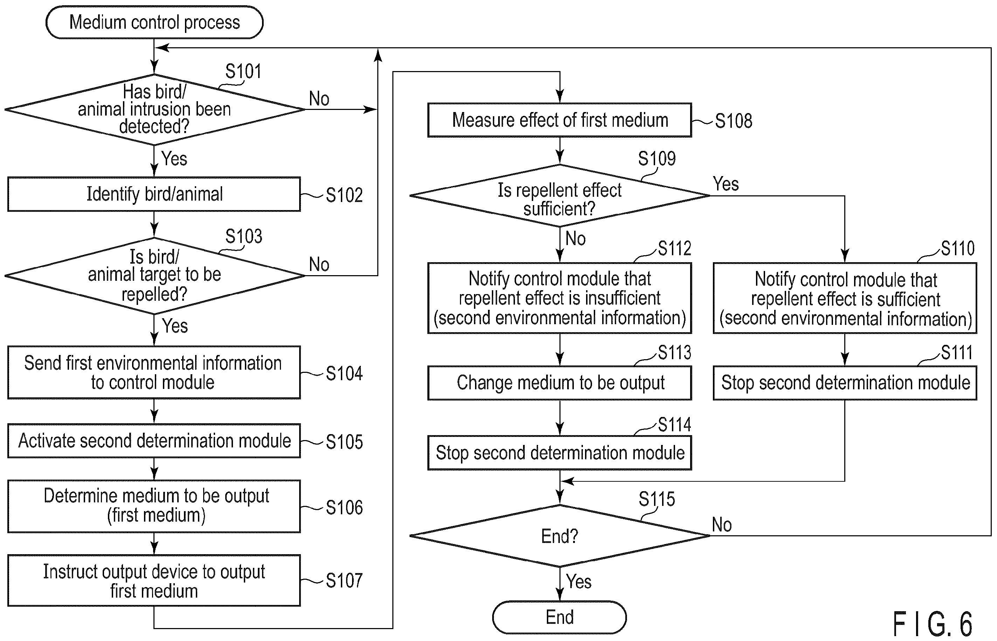

FIG. 6 is a flowchart showing an example of the procedure of a medium control process executed in the control device 13. The medium control process is a process that controls the medium 6 output from the output device 12 by using the sensor information. The control device 13 executes the medium control process in response to, for example, starting of the system 1.

First, the first determination module 101 determines whether an intrusion of an animal 5 into the surrounding environment 2 has been detected or not by using the sensor information (sensor information for the first period) received from the sensor 11 (step S101). While an intrusion of an animal 5 into the surrounding environment 2 is detected, the control module 103 may operate the sensor 11 and the first determination module 101 and stop other components (for example, the second determination module 102) so as to reduce the power consumed by the system 1.

When an intrusion of an animal 5 has not been detected (No in step S101), the process by the first determination module 101 returns to step S101. That is, the first determination module 101 repeatedly performs the process of step S101 until an intrusion of an animal 5 is detected.

When the intrusion of the animal 5 has been detected (Yes in step S101), the first determination module 101 identifies the detected animal 5 (step S102). Specifically, the first determination module 101 identifies the species of the animal 5. Species of animals to be identified include, for example, Asiatic black bears, Japanese deer, wild boars, Japanese macaques, cats, crows, and pigeons. The first determination module 101 then determines whether or not the identified animal 5 is any of animals to be repelled (step S103). The animals to be repelled include, for example, an Asiatic black bear, Japanese deer, a wild boar, and a crow.

In a case where the identified animal 5 is not any of animals to be repelled (No in step S103), the process by the first determination module 101 returns to step S101. In other words, the first determination module 101 repeatedly performs the process from step S101 to step S103 until an intrusion of an animal 5 to be repelled is detected.

In a case where the identified animal 5 is an animal to be repelled (Yes in step S103), the first determination module 101 sends information indicating that the animal 5 to be repelled has intruded (first environmental information), to the control module 103 (step S104).

The control module 103 activates the second determination module 102 in response to receiving the first environmental information indicating that the animal 5 to be repelled has intruded (step S105). The control module 103 determines an output content of a medium 6 (hereinafter, also referred to as a first medium 6) used for the animal 5 to be repelled by using the bird/animal - medium management table 243 and the medium management table 242 (step S106). Specifically, the control module 103 acquires a medium ID associated with the animal 5 to be repelled (bird/animal ID), from the bird/animal - medium management table 243. The control module 103 acquires the output content of the medium 6 associated with the acquired medium ID (that is, the first medium 6), from the medium management table 242. Then, the control module 103 instructs the output device 12 to boot up and output the first medium 6 (step S107). In response to the instruction by the control module 103, the output device 12 is booted up and outputs the first medium 6.

The second determination module 102 measures the repellent effect of the first medium 6 on the animal 5 to be repelled by using the sensor information (sensor information for the second period) received from the sensor 11 (step S108). The second determination module 102 determines whether or not the measured repellent effect is sufficient (step S109). The second determination module 102 determines whether or not the repellent effect is sufficient, for example, based on a relationship between a value indicative of the repellent effect and a threshold value. Specifically, the second determination module 102 determines whether or not a time during which the animal 5 to be repelled paused in response to the output of the first medium 6 (pause time) is equal to or longer than the first threshold value, for example. When the pause time is equal to or longer than the first threshold value, the second determination module 102 determines that the repellent effect of the first medium 6 on the animal 5 to be repelled is sufficient. On the other hand, when the pause time is shorter than the first threshold value, the second determination module 102 determines that the repellent effect of the first medium 6 on the animal 5 to be repelled is insufficient.

In a case where the repellent effect is sufficient (Yes in step S109), the second determination module 102 notifies the control module 103 of the second environmental information indicating that the repellent effect of the first medium 6 on the animal 5 to be repelled is sufficient (step S110). In response to this notification, the control module 103 stops the operation of the second determination module 102 (step Sill) and proceeds to step S115.

In a case where the repellent effect is insufficient (No in step S109), the second determination module 102 notifies the control module 103 of the second environmental information indicating that the repellent effect of the first medium 6 on the animal 5 to be repelled is insufficient (step S112). In response to this notification, the control module 103 changes the output content of the medium 6 used for the animal 5 to be repelled from the first medium 6 to another output content of a medium 6 (hereinafter, also referred to as a second medium 6) (step S113). Specifically, the control module 103 changes, in an entry in the bird/animal - medium management table 243 that includes the animal 5 to be repelled (bird/animal ID), the medium ID that specifies the output content of the medium 6 from the medium ID of the first medium 6 to the medium ID of the second medium 6. Further, the control module 103 then stops the operation of the second determination module 102 (step S114) and proceeds to step S115.

As described above, the second determination module 102 is activated in step S105 and stopped in step Sill or step S114. That is, the second determination module 102 operates only within the period for which the measurement of the repellent effect is required. With this configuration, it is possible to lower the power consumption of the control device 13.

Next, the control module 103 determines whether or not to terminate the medium control process (step S115). For example, when the system 1 will be stopped, the control module 103 determines to terminate the medium control process.

In a case where the medium control process is not terminated (No in step S115), the process is returned to step S101, which is executed by the first determination module 101.

In a case where the medium control process is terminated (Yes in step S115), the control module 103 terminates the medium control process.

Through the above-described medium control process, the first determination module 101 detects the animal 5 to be repelled by using the sensor information. The control module 103 determines the first medium 6 to be used for the animal 5 to be repelled and makes the output device 12 to output the first medium 6. The second determination module 102 measures the repellent effect of the first medium 6 on the animal 5 to be repelled by using the sensor information. When the repellent effect is insufficient, the control module 103 changes the medium 6 output to the animal 5 from the first medium 6 to another medium 6. Thus, the control module 103 can restore the repellent effect on the animal 5 by outputting the other medium 6. Therefore, the control module 103 can continuously and effectively reduce the damage caused by the intrusion of animals 5 into the specific area and the impact on the animals 5 themselves.

Note that in the medium control process, the measurement of the repellent effect of the medium 6 in step S108 and the determination whether or not the repellent effect is sufficient in step S109 are performed after the output device 12 outputs the medium 6 in response to the instruction in step S107. However, the measurement of the repellent effect of the medium 6 in step S108 and the determination whether or not the repellent effect is sufficient in step S109 may be performed independently of the timing of outputting the medium 6, such as before the output device 12 outputs the medium 6.

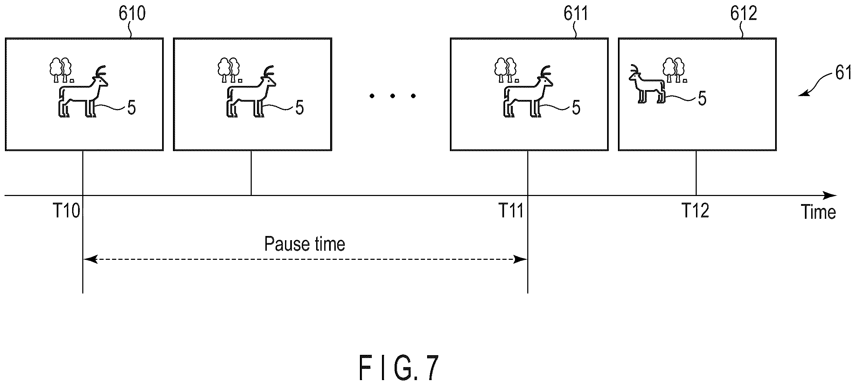

Next, with reference to FIGS. 7 to 10, several specific examples of acquiring environmental information and changing an output content of a medium 6 will be explained. The second determination module 102 of the control device 13 acquires the second environmental information by using the sensor information received from the sensor 11. The second environmental information includes, for example, information on behavior of an animal 5 in response to the medium 6. For example, the repellent effect of the medium 6 on the animal 5 is measured as the behavior of the animal 5 in response to the medium 6. The control module 103 controls the output content of the medium 6 in accordance with the second environmental information.

FIG. 7 illustrates a first measurement example of the repellent effect in the control device 13. In the first measurement example, the second determination module 102 measures the repellent effect of a medium 6 on an animal 5 on the basis of a pause time of the animal 5 in response to the output medium 6. This is based on characteristics that, as the animal 5 repeatedly experiences the same output content of the medium 6 (for example, repeatedly hears the same acoustic wave), the repellent effect of the output content of the medium 6 on the animal 5 decreases and the pause time of the animal 5 becomes shorter.

For example, in a case where the sensor 11 is a camera, the sensor information is video data that includes a plurality of images in time series. The second determination module 102 measures a time period for which the animal 5 pauses (i.e., stops its motion) in response to the output of the medium 6 by using the video data.

In the example shown in FIG. 7, a plurality of images 61 in time series are shown. The plurality of images 61 are images obtained by the sensor 11 (in this case, a camera) that captures the surrounding environment 2. Each of the plurality of images 61 includes an animal 5 that has intruded into the surrounding environment 2. Here, it is assumed that at a time T10 when the first image 610 is captured, the output device 12 outputs the first medium 6. The time when an image 611 is captured is referred to as a time T11. The time when an image 612 is captured is referred to as a time T12.

The second determination module 102 analyzes the plurality of images 61, thereby detecting that the animal 5 pauses (remains still) from the time T10 to the time T11 and then moves at the time T12. The second determination module 102 calculates a time period from the time T10 to the time T11 for which the animal 5 pauses as a pause time of the animal 5 (hereinafter, referred to as a first pause time).

In a case where the first pause time is shorter than the first threshold value, or in a case where the first pause time is shorter than a pause time of the animal 5 in response to the first medium 6 when the animal 5 last intruded into the surrounding environment 2 (second pause time), the control module 103 determines that the repellent effect of the first medium 6 is insufficient. The control module 103 then changes the output content of the medium 6 used for the animal 5. Specifically, for example, in an entry in the bird/animal - medium management table 243 that corresponds to this animal 5, the control module 103 changes a medium ID set in the medium ID field to another medium ID.

In contrast, in a case where the first pause time is equal to or longer than the first threshold value, or in a case where the first pause time is equal to or longer than the second pause time, the control module 103 determines that the repellent effect of the first medium 6 is sufficient. In this case, the control module 103 does not change the output content of the medium 6 used for the animal 5. Specifically, the control module 103 does not change the medium ID in the entry in the bird/animal - medium management table 243 that corresponds to the animal 5.

Note that the first threshold value is specifiable in advance. For example, while the system 1 performs a trial operation after being installed, the second determination module 102 stores, for example, in the storage unit 100, a change of pause times of an animal 5 by acquiring the pause times whenever a certain medium 6 is output. The control module 103 sets, for example, a statistical value based on the distribution of the stored pause times as the first threshold value. The statistical value is, for example, a median, an average, or a value corresponding to the top X% of the pause times that are arranged in a specific order (for example, in an ascending order or a descending order). For example, Xo is 30%. In addition, the first threshold value may be set for each species of animals 5 or for each individual animal 5.

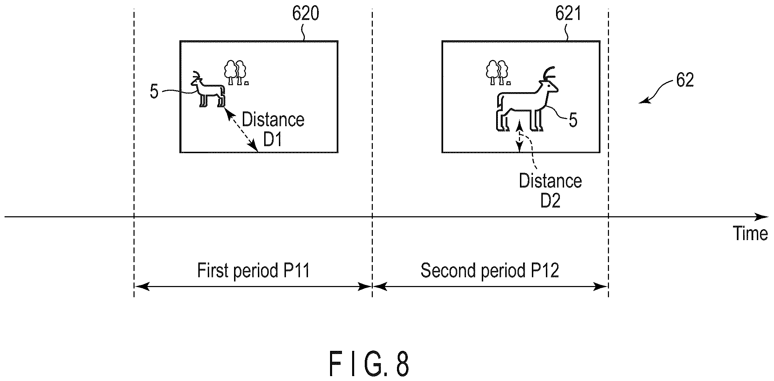

FIG. 8 illustrates a second measurement example of the repellent effect in the control device 13. In the second measurement example, the second determination module 102 measures the repellent effect of a medium 6 on an animal 5, based on the distance between the animal 5 and the output device 12. This is based on characteristics that, as the animal 5 repeatedly experiences the same output content of the medium 6, the repellent effect of the output content on the animal 5 decreases and the animal 5 learns to approach the output device 12.

In a case where, for example, the sensor 11 is a camera, the sensor information is video data that includes a plurality of images in time series. The second determination module 102 measures the distance between the animal 5 and the output device 12 by using the video data. Note that in the second determination module 102, it is assumed that a position of the sensor 11 and a position of the output device 12 are known.

In the example shown in FIG. 8, a plurality of images 62 included in the video data are shown. The plurality of images 62 are obtained by the sensor 11 (here, a camera) that captures the surrounding environment 2. An image 620 is an image captured at a time when the animal 5 approaches closest to the output device 12 within a first period P11. An image 621 is an image captured at a time when the animal 5 approaches closest to the output device 12 within a second period P12 after the first period P11. The first period P11 and the second period P12 are, for example, periods of the same length. The first period P11 is a period for which the animal 5 intruded into the surrounding environment 2 last time. The second period P12 is a period for which the animal 5 intruded into the surrounding environment 2 this time.

The second determination module 102 measures the distance D1 between the animal 5 and the output device 12 by analyzing the image 620. The distance D1 is the shortest distance between the animal 5 and the output device 12 in the first period P11. Further, the second determination module 102 measures the distance D2 between the animal 5 and the output device 12 by analyzing the image 621. The distance D2 is the shortest distance between the animal 5 and the output device 12 in the second period P12.

In a case where the distance D2 is shorter than the second threshold value, or in a case where the distance D2 is shorter than the distance D1 at the time when the animal 5 last intruded into the surrounding environment 2, the control module 103 determines that the repellent effect of the medium 6 (the first medium 6) that is currently output to the animal 5 is insufficient. Then, the control module 103 changes the output content of the medium 6 used for the animal 5.

By contrast, in a case where the distance D2 is equal to or longer than the second threshold value, or in a case where the distance D2 is equal to or longer than the distance D1, the control module 103 determines that the repellent effect of the first medium 6 is sufficient. In this case, the control module 103 does not change the output content of the medium 6 used for the animal 5.

In the example shown in FIG. 8, the control module 103 determines that the repellent effect is insufficient because, for example, the distance D2 in the second period P12 is shorter than the distance D1 in the first period P11, and changes the output content of the medium 6 used for the animal 5.

Note that the second threshold value is specifiable in advance. For example, while the system 1 performs a trial operation after being installed, the second determination module 102 stores, for example, in the storage unit 100, a change of distances between an animal 5 and the output device 12 during a certain period after a specific medium 6 is output. The control module 103 sets, for example, a statistical value based on the distribution of the stored distances as the second threshold value. The statistical value is, for example, a median, an average, or a value corresponding to the top X% of the distances that are arranged in a specific order. The second threshold value may be set for each species of animals 5, or for each individual animal 5.

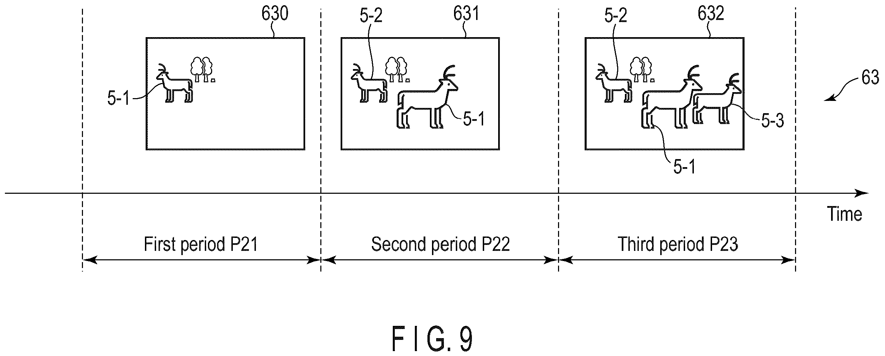

FIG. 9 illustrates a third measurement example of the repellent effect in the control device 13. In the third measurement example, the second determination module 102 measures the repellent effect of a medium 6 on an animal 5 on the basis of the number of animals 5. This is based on characteristics that, as animals 5 repeatedly experience the same output content of the medium 6, the repellent effect of the output content on the animals 5 decreases and the number of animals 5 appearing in the vicinity of the output device 12 increases.

For example, in a case where the sensor 11 is a camera, the sensor information is video data that includes a plurality of images in time series. The second determination module 102 measures (counts) the number of animals 5 by using the video data.

In the example shown in FIG. 9, a plurality of images 63 in the video data are shown. The plurality of images 63 are images obtained by the sensor 11 (here, a camera) that captures the surrounding environment 2. An image 630 is, for example, an image captured when the number of animals 5 is largest within a first period P21. An image 631 is an image captured when the number of animals 5 is largest within a second period P22 after the first period P21. An image 632 is an image captured when the number of animals 5 is largest within a third period P23 after the second period P22. The first period P21, the second period P22, and the third period P23 are, for example, periods of the same length.

The second determination module 102 detects one animal 5-1 by analyzing the image 630, and calculates one as the number of animals 5. The second determination module 102 detects two animals 5-1 and 5-2 by analyzing the image 631, and calculates two as the number of animals 5. The second determination module 102 detects three animals 5-1, 5-2, and 5-3 by analyzing the image 632, and calculates three as the number of animals 5.

Here, for example, it is assumed a first case where the second period P22 is a period for which the animals 5 have intruded the surrounding environment 2 this time and the first period P21 is a period for which the animal 5 intruded the surrounding environment 2 last time.

In the first case, when the number of animals 5 in the second period P22 is greater than the third threshold value, or when the number of animals 5 in the second period P22 is greater than the number of animals 5 in the first period P21, the control module 103 determines that the repellent effect of the medium 6 (first medium 6) that is currently output to the animals 5 is insufficient. The control module 103 then changes the output content of the medium 6 used for the animals 5.

By contrast, when the number of animals 5 in the second period P22 is equal to or less than the third threshold value, or when the number of animals 5 in the second period P22 is equal to or less than the number of animals 5 in the first period P21, the control module 103 determines that the repellent effect of the first medium 6 is sufficient. In this case, the control module 103 does not change the output content of the medium 6 used for the animals 5.

In the example shown in FIG. 9, the control module 103 determines that the repellent effect is insufficient because, for example, the number of animals 5 in the second period P22 (that is, two) is greater than the number of animals 5 in the first period P21 (that is, one), and changes the output content of the medium 6 used for the animals 5.

Further, for example, it is assumed a second case where the third period P23 is a period for which the animals 5 have intruded the surrounding environment 2 this time and the second period P22 is a period for which the animals 5 intruded the surrounding environment 2 last time.

In the second case, when the number of animals 5 in the third period P23 is greater than the third threshold value, or when the number of animals 5 in the third period P23 is greater than the number of animals 5 in the second period P22, the control module 103 determines that the repellent effect of the medium 6 (the first medium 6) that is currently output to the animals 5 is insufficient. The control module 103 then changes the output content of the medium 6 used for the animals 5.

By contrast, when the number of animals 5 in the third period P23 is equal to or less than the third threshold value, or when the number of animals 5 in the third period P23 is equal to or less than the number of animals 5 in the second period P22, the control module 103 determines that the repellent effect of the first medium 6 is sufficient. In this case, the control module 103 does not change the output content of the medium 6 used for the animals 5.

In the example shown in FIG. 9, the control module 103 determines that the repellent effect is insufficient because, for example, the number of animals 5 in the third period P23 (that is, three) is greater than the number of animals 5 in the second period P22 (that is, two), and changes the output content of the medium 6 used for the animals 5.

Note that the third threshold value is specifiable in advance. For example, while the system 1 performs a trial operation after being installed, and the second determination module 102 stores, for example, in the storage unit 100, a change in the numbers of animals 5 that appear in the vicinity of the output device 12 (that is, in the surrounding environment 2) during a certain period after a specific medium 6 is output. The control module 103 sets a statistical value based on the distribution of the stored numbers of animals 5 as the third threshold value. This statistical value is, for example, a value equivalent to the X% of the maximum value, an average value, or a median value. Alternatively, a numerical value such as two or three may be set as the third threshold value by an observer or the like. The third threshold value may be set for each species of animals 5, or for each individual animal 5.

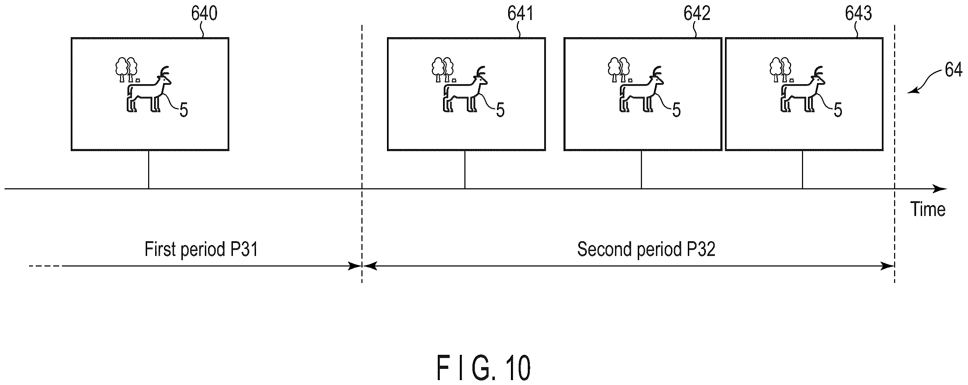

FIG. 10 illustrates a fourth measurement example of the repellent effect in the control device 13. In the fourth measurement example, the second determination module 102 measures the repellent effect of a medium 6 on an animal 5 (or animals 5), based on the frequency at which the animal 5 has intruded into the surrounding environment 2 (hereinafter, also referred to as an intrusion frequency). This is based on characteristics that, as the animal 5 repeatedly experiences the same output content of the medium 6, the repellent effect of the output content on the animal 5 decreases and the intrusion frequency of the animal 5 increases. The second determination module 102 may acquire the intrusion frequency for each species of animals 5 and measure the repellent effect of the medium 6 on each species of the animals 5.

For example, in a case where the sensor 11 is a camera, the sensor information is video data that includes a plurality of images in time series. The second determination module 102 measures the intrusion frequency of an animal 5 (or animals 5) by using the video data.

In the example shown in FIG. 10, a plurality of images 64 included in the video data are shown. The plurality of images 64 are images obtained by the sensor 11 (in this case, a camera) that captures the surrounding environment 2. An image 640 is an image that is captured when a new intrusion of an animal 5 into the surrounding environment 2 has been detected within a first period P31. Each of images 641, 642, and 643 is an image that is captured when a new intrusion of an animal 5 into the surrounding environment 2 has been detected within a second period P32 after the first period P31. The first period P31 and the second period P32 are, for example, periods of the same length.

For example, the second determination module 102 calculates one as the intrusion frequency of animals 5 in the first period P31on the basis of the number of images (i.e., the image 640) in which a new intrusion of an animal 5 into the surrounding environment 2 has been detected within the first period P31. The control module 103 calculates three as the intrusion frequency of animals 5 in the second period P32 on the basis of the number of images (i.e., the images 641, 642, and 643) in which new intrusions of an animal 5 into the surrounding environment 2 have been detected in the second period P32.

Then, in a case where the intrusion frequency in the second period P32 is higher than the fourth threshold value, or in a case where the intrusion frequency in the second period P32 is higher than the intrusion frequency in the first period P31, the control module 103 determines that the repellent effect of the medium 6 (first medium 6) that is currently output to the animal 5 is insufficient. Then, the control module 103 changes the output content of the medium 6 used for the animal 5.

By contrast, in a case where the intrusion frequency in the second period P32 is equal to or lower than the fourth threshold value, or in a case where the intrusion frequency in the second period P22 is equal to or lower than the intrusion frequency in the first period P31, the control module 103 determines that the repellent effect of the first medium 6 is sufficient. In this case, the control module 103 does not change the output content of the medium 6 used for the animal 5.

In the example shown in FIG. 10, the control module 103 determines that the repellent effect is insufficient because, for example, the intrusion frequency in the second period P32 (that is, three) is higher than the intrusion frequency in the first period P31 (that is, one), and changes the output content of the medium 6 used for the animal 5.

Note that the fourth threshold value is specifiable in advance. For example, while the system 1 performs a trial operation after being installed, the second determination module 102 stores, for example, in the storage unit 100, each time when an animal 5 has been detected in the vicinity of the output device 12 during a certain period after a specific medium 6 is output. The control module 103 calculates, as the intrusion frequency, the number of times the animal 5 has been detected in each unit period of time by using the stored times. For example, the control module 103 sets, as the fourth threshold value, a double the value of the intrusion frequency for the unit period of time immediately after an output medium 6 is changed, or a value obtained by increasing, by X%, the minimum value of the intrusion frequencies calculated for respective unit periods of time. For example, X% is 50%. Further, the fourth threshold value may be set for each species of animals 5, or for each individual animal 5.

Further, the second determination module 102 may measure the repellent effect of a medium 6 on an animal 5 on the basis of the heart rate of the animal 5 that has intruded into the surrounding environment 2. This is based on characteristics that as the animal 5 repeatedly experiences the same output content of the medium 6, the repellent effect of the output content on the animal 5 decreases and the heart rate of the animal 5 does not increase.

For example, in a case where the sensor 11 is a radio device with an antenna, the sensor information is data of the reflected wave of an electromagnetic wave output by the output device 12. The second determination module 102 measures the heart rate of the animal 5 by using the data of the reflected wave. For example, the second determination module 102 measures the heart rate of the animal 5 in response to the output of the medium 6 (the first heart rate) by using the data of the reflected wave after the medium 6 is output by the output device 12. Note that the second determination module 102 may measure the usual heart rate of the animal 5 (the second heart rate) by using the data of the reflected wave before the medium 6 is output by the output device 12.

In a case where the first heart rate is lower than the fifth threshold value, or in a case where the first heart rate is not increased by the sixth threshold value or more compared to the second heart rate, the control module 103 determines that the repellent effect of the medium 6 (first medium 6) that is currently output to the animal 5 is insufficient. The control module 103 then changes the output content of the medium 6 used for the animal 5.

By contrast, in a case where the first heart rate is equal to or higher than the fifth threshold value, or in a case where the first heart rate has increased by the sixth threshold value or more compared to the second heart rate, the control module 103 determines that the repellent effect of the first medium 6 is sufficient. In this case, the control module 103 does not change the output content of the medium 6 used for the animal 5.

Note that the fifth threshold value and the sixth threshold value are specifiable in advance. For example, while the system 1 performs a trial operation after being installed, the second determination module 102 stores, for example, in the storage unit 100, the heart rate of the animal 5 after a specific medium 6 is output, or the heart rates of the animal 5 before and after the medium 6 is output. The control module 103 sets, as the fifth threshold value, for example, a value obtained by decreasing, by X%, the heart rate at a time when a specific medium 6 is output for the first time by using the stored heart rate. For example, X% is 30%. Further, the control module 103 sets, as the sixth threshold value, for example, a value equivalent to Y% of the heart rate before the output of the medium 6 (the second heart rate) by using the stored heart rate. For example, Y% is 50%. Further, each of the fifth threshold value and sixth threshold value may be set for each species of animals 5, or for each individual animal 5.

As described above, the second determination module 102 measures the various indicators of the repellent effect (second environmental information) relating to the medium 6 (more specifically, the output content of the medium 6) and thus can more accurately detect whether or not the animal 5 ends up becoming accustomed to the medium 6. In accordance with the second environmental information, the control module 103 can control the output content of the medium 6. Therefore, the system 1 can sustain the repellent effect of the output on the animal 5 for a long period of time, and reduce the damage caused by the animal 5 intruding into the specific area and the impact on the animal 5 itself.

As explained above, according to the arrangement, damage caused by an intrusion of a bird or an animal can be reduced. The output device 12 outputs a medium 6-1 or a substance 6-2. The sensor 11 generates sensor information by sensing the surrounding environment 2 of a location where the output device 12 is installed. The control device 13 controls the output device 12 and the sensor 11. In the control device 13, the first determination module 101 and the second determination module 102 acquires environmental information on the surrounding environment 2 changed in response to the output medium 6-1 or substance 6-2 by using the sensor information. The control module 103 changes, based on the environmental information, at least one of (A) whether or not the output device 12 outputs the medium 6-1 or the substance 6-2 and (B) an output content of the medium 6-1 or substance 6-2 to be output.

Thus, the system 1 can maintain the output of the medium 6 which has a high repellent effect on the bird or animal 5. In other words, the repellent effect of the output by the output device 12 on the bird or animal 5 can be maintained for a long period of time. Therefore, the system 1 can reduce the damage caused by the intrusion of the bird or animal 5 and the impact on the bird or animal 5 itself.

While certain arrangements have been described, these arrangements have been presented by way of example only, and are not intended to limit the scope of the claims. Indeed, the system and the control device described herein may be embodied in a variety of other forms; furthermore, various omissions, substitutions and changes in the form of the system and the control device described herein may be made.

The arrangements as described above include clauses below.

### Clause 1

A system comprising:
an output device configured to output a medium or a substance;
a sensor configured to generate sensor information by sensing a surrounding environment of a location where the output device is installed; and
a control device configured to control the output device and the sensor, wherein
the control device comprises:
   a processing module configured to acquire environmental information on the surrounding environment changed in response to the output medium or substance by using the sensor information; and
   a control module configured to change, based on the environmental information, at least one of (A) whether or not the output device outputs the medium or the substance and (B) an output content of the medium or substance to be output.

### Clause 2

The system according to clause 1, wherein
the processing module configured to acquire the environmental information on one or more birds and/or animals that have intruded into the surrounding environment by using the sensor information.

### Clause 3

The system according to clause 2, wherein
the processing module configured to identify an individual of each of the birds and/or animals by using the sensor information and acquire the environmental information on the individual.

### Clause 4

The system according to clause 2, wherein
the processing module configured to acquire the environmental information based on at least one of a first pause time of each of the birds and/or animals in response to the output medium or substance, a first distance between each of the birds and/or animals and the output device, a first number of the birds and/or animals, a first frequency at which the birds and/or animals intrude into the surrounding environment, and a first heart rate of each of the birds and/or animals in response to the output medium or substance.

### Clause 5

The system according to clause 4, wherein
the control module configured to change, based on the environmental information, the output content in a case where the first pause time is shorter than a threshold value or in a case where the first pause time is shorter than a second pause time of each of the birds and/or animals in response to the medium or the substance output when the birds and/or animals last intruded into the surrounding environment.

### Clause 6

The system according to clause 4 or 5, wherein
the control module configured to change, based on the environmental information, the output content in a case where the first distance is shorter than a threshold value or in a case where the first distance is shorter than a second distance between the output device and each of the birds and/or animals that last intruded into the surrounding environment.

### Clause 7

The system according to any one of clauses 4 to 6, wherein
the control module configured to change, based on the environmental information, the output content in a case where the first number is greater than a threshold value or in a case where the first number is greater than a second number of the birds and/or animals that last intruded into the surrounding environment.

### Clause 8

The system according to any one of clauses 4 to 7, wherein
the first frequency is a frequency at which the birds and/or animals intruded into the surrounding environment during a first period, and
the control module configured to change, based on the environmental information, the output content in a case where the first frequency is higher than a threshold value or in a case where the first frequency is higher than a second frequency at which the birds and/or animals intruded into the surrounding environment during a second period before the first period.

### Clause 9

The system according to any one of clauses 4 to 8, wherein
the control module configured to change, based on the environmental information, the output content in a case where the first heart rate is lower than a first threshold value or in a case where the first heart rate is not increased by a second threshold value or more compared to a second heart rate of each of the birds and/or animals before the output device outputs the medium or the substance.

### Clause 10

The system according to any one of clauses 1 to 9, wherein
the processing module configured to acquire first environmental information on the birds and/or animals intruded into the surrounding environment by using the sensor information for a first period,
the control module configured to cause the output device to output the medium or the substance, based on the first environmental information,
the processing module configured to acquire second environmental information on the birds and/or animals changed in response to the output medium or substance by using the sensor information for a second period after the first period, and
the control module configured to change the output content, based on the second environmental information.

### Clause 11

The system according to clause 10, wherein
the processing module configured to acquire third environmental information on the birds and/or animals that intruded into the surrounding environment, by using the sensor information for a third period after the second period, and
the control module configured to cause the output device to output the medium or the substance according to the changed output content, based on the third environmental information.

### Clause 12

A control device comprising:
a processing module configured to acquire, by using sensor information generated by a sensor that senses a surrounding environment of a location where an output device that outputs a medium or a substance is installed, environmental information on the surrounding environment changed in response to the output medium or substance; and
a control module configured to change, based on the environmental information, at least one of (A) whether or not the output device outputs the medium or the substance and (B) an output content of the medium or substance to be output.

### Clause 13

A program that is executable by a computer, the program controlling the computer to execute functions of:
acquiring, by using sensor information generated by a sensor that senses a surrounding environment of a location where an output device that outputs a medium or a substance is installed, environmental information on the surrounding environment changed in response to the output medium or substance; and
changing, based on the environmental information, at least one of (A) whether or not the output device outputs the medium or the substance and (B) an output content of the medium or substance to be output.

## Claims

1. A system comprising:
an output device (12) configured to output a medium (6-1) or a substance (6-2);
a sensor (11) configured to generate sensor information by sensing a surrounding environment (2) of a location where the output device (12) is installed; and
a control device (13) configured to control the output device (12) and the sensor (11), wherein
the control device (13) comprises:
a processing module (101, 102) configured to acquire environmental information on the surrounding environment (2) changed in response to the output medium (6-1) or substance (6-2) by using the sensor information; and
a control module (103) configured to change, based on the environmental information, at least one of (A) whether or not the output device (12) outputs the medium (6-1) or the substance (6-2) and (B) an output content of the medium (6-1) or substance (6-2) to be output.

2. The system according to claim 1, wherein
the processing module (101, 102) configured to acquire the environmental information on one or more birds and/or animals (5) that have intruded into the surrounding environment (2) by using the sensor information.

3. The system according to claim 2, wherein
the processing module (101, 102) configured to identify an individual of each of the birds and/or animals (5) by using the sensor information and acquire the environmental information on the individual.

4. The system according to claim 2, wherein
the processing module (101, 102) configured to acquire the environmental information based on at least one of a first pause time of each of the birds and/or animals (5) in response to the output medium (6-1) or substance (6-2), a first distance between each of the birds and/or animals (5) and the output device (12), a first number of the birds and/or animals (5), a first frequency at which the birds and/or animals (5) intrude into the surrounding environment (2), and a first heart rate of each of the birds and/or animals (5) in response to the output medium (6-1) or substance (6-2).

5. The system according to claim 4, wherein
the control module (103) configured to change, based on the environmental information, the output content in a case where the first pause time is shorter than a threshold value or in a case where the first pause time is shorter than a second pause time of each of the birds and/or animals (5) in response to the medium (6-1) or the substance (6-2) output when the birds and/or animals (5) last intruded into the surrounding environment (2).

6. The system according to claim 4, wherein
the control module (103) configured to change, based on the environmental information, the output content in a case where the first distance is shorter than a threshold value or in a case where the first distance is shorter than a second distance between the output device (12) and each of the birds and/or animals (5) that last intruded into the surrounding environment (2) .

7. The system according to claim 4, wherein
the control module (103) configured to change, based on the environmental information, the output content in a case where the first number is greater than a threshold value or in a case where the first number is greater than a second number of the birds and/or animals (5) that last intruded into the surrounding environment (2).

8. The system according to claim 4, wherein
the first frequency is a frequency at which the birds and/or animals (5) intruded into the surrounding environment (2) during a first period, and
the control module (103) configured to change, based on the environmental information, the output content in a case where the first frequency is higher than a threshold value or in a case where the first frequency is higher than a second frequency at which the birds and/or animals (5) intruded into the surrounding environment (2) during a second period before the first period.

9. The system according to claim 4, wherein
the control module (103) configured to change, based on the environmental information, the output content in a case where the first heart rate is lower than a first threshold value or in a case where the first heart rate is not increased by a second threshold value or more compared to a second heart rate of each of the birds and/or animals (5) before the output device (12) outputs the medium (6-1) or the substance (6-2) .

10. The system according to claim 1, wherein
the processing module (101, 102) configured to acquire first environmental information on the birds and/or animals (5) intruded into the surrounding environment (2) by using the sensor information for a first period,
the control module (103) configured to cause the output device (12) to output the medium (6-1) or the substance (6-2), based on the first environmental information,
the processing module (101, 102) configured to acquire second environmental information on the birds and/or animals (5) changed in response to the output medium (6-1) or substance (6-2) by using the sensor information for a second period after the first period, and
the control module (103) configured to change the output content, based on the second environmental information.

11. The system according to claim 10, wherein the processing module (101, 102) configured to acquire third environmental information on the birds and/or animals (5) that intruded into the surrounding environment (2), by using the sensor information for a third period after the second period, and
the control module (103) configured to cause the output device (12) to output the medium (6-1) or the substance (6-2) according to the changed output content, based on the third environmental information.

12. A control device comprising:
a processing module (101, 102) configured to acquire, by using sensor information generated by a sensor (11) that senses a surrounding environment (2) of a location where an output device (12) that outputs a medium (6-1) or a substance (6-2) is installed, environmental information on the surrounding environment (2) changed in response to the output medium (6-1) or substance (6-2); and
a control module (103) configured to change, based on the environmental information, at least one of (A) whether or not the output device (12) outputs the medium (6-1) or the substance (6-2) and (B) an output content of the medium (6-1) or substance (6-2) to be output.

13. A program that is executable by a computer, the program controlling the computer to execute functions of:
acquiring, by using sensor information generated by a sensor (11) that senses a surrounding environment (2) of a location where an output device (12) that outputs a medium (6-1) or a substance (6-2) is installed, environmental information on the surrounding environment (2) changed in response to the output medium (6-1) or substance (6-2); and
changing, based on the environmental information, at least one of (A) whether or not the output device (12) outputs the medium (6-1) or the substance (6-2) and (B) an output content of the medium (6-1) or substance (6-2) to be output.
